# EUROPÄISCHE PATENTSCHRIFT

(11) **EP 1 343 651 B1**
(45) Veröffentlichungstag und Bekanntmachung des Hinweises auf die Patenterteilung: **10.03.2010**
(21) Anmeldenummer: 01984835.7
(22) Anmeldetag: 13.12.2001
(51) Int. Cl.: B60J 10/00, B60J 10/12

(54) **DOPPELSEITIGES KLEBEBAND UND VERFAHREN ZUR BEFESTIGUNG EINES DICHTUNGSELEMENTS AN EINER VERWENDUNGSSTELLE**
DOUBLE-SIDED ADHESIVE TAPE AND METHOD FOR FIXING A SEALING ELEMENT IN PLACE AT AN APPLICATION SITE
BANDE ADHESIVE DOUBLE FACE ET PROCEDE DE MISE EN PLACE D'UN ELEMENT D'ETANCHEITE

(30) Priorität: 21.12.2000 DE 10064386
(43) Veröffentlichungstag der Anmeldung: 17.09.2003
(73) Patentinhaber: Webasto AG, 82131 Stockdorf (DE); REHAU AG + Co, 95111 Rehau (DE)
(72) Erfinder: HAHN, Roland, 82110 Germering (DE)
(74) Vertreter: Wiese, Gerhard
(86) Internationale Anmeldenummer: PCT/EP2001/014673
(87) Internationale Veröffentlichungsnummer: WO 2002/049866

(56) Entgegenhaltungen:
- EP-A- 1 095 808
- WO-A-99/26801
- DE-A- 19 916 985

## Beschreibung

Die vorliegende Erfindung betrifft ein Dichtungselement gemäß dem Oberbegriff des Patentanspruchs 1 und ein Verfahren zur Herstellung eines Dichtungselementes gemäß dem Oberbegriff des Patentanspruchs 11.

Aus der WO 99/26801 A1 ist ein Dichtungselement bekannt, bei dem ein Dichtungskörper aus einem thermoplastischen Elastomer oder aus Weich-PVC mittels einer ersten Klebeschicht aus einem Heißschmelzkleber an einem Klebeband befestigt wird. Das Klebeband weist in einer Ausführungsform eine Trägerschicht aus Acrylatschaum auf. An der Rückseite des Klebebandes ist eine zweite Kleberschicht aufgetragen, die von einer abziehbaren Folie abgedeckt ist. Nach Abziehen der Folie wird das Dichtungselement an einer Verwendungsstelle, zum Beispiel an einem Karosserieblech aufgeklebt.

Im Automobilbereich sind Silikondichtungen bekannt, welche mit einem Steckfuß versehen sind, mittels welchem Sie an der Verwendungsstelle eingesteckt werden können. Diese Befestigungsart bringt jedoch einen hohen Fertigungs- und Bauraumbedarf mit sich und ist insofern von Nachteil.

Aus der nicht vorveröffentlichten Deutschen Patentanmeldung DE 199 52 399 (bzw. EP 1 095 808 A2) ist ferner eine Silikondichtung bekannt, die mittels eines flüssigen Silikonklebers an einem einseitig wirkenden Klebeband befestigbar ist, dessen zunächst von einer Schutzfolie abgedeckte äußere Klebefläche nach Abziehen der Schutzfolie zur Befestigung an einer Verwendungsstelle dient. Die mehrere Stunden lange Aushärtezeit des flüssigen Silikonklebers erschwert eine prozesssichere Anwendung in einer auf einen schnellen Durchsatz ausgelegten Massenproduktion. Ein weiterer Nachteil dieser Silikondichtung wird darin gesehen, dass durch die Verwendung des flüssigen Silikonklebers eine weichelastische Verbindung zwischen dem Trägerelement und dem Dichtungskörper des Dichtungselementes erfolgt, da die flüssigen Silikonkleber als dauerklebrige Klebstoffe zu einer reversiblen Klebeverbindung führen, welche unter bestimmten Beanspruchungsbedingungen zu einer Beeinträchtigung der Dichtungswirkung, beispielsweise beim Einsatz in Fahrzeugschiebedächern führt.
Durch die weichelastische Verbindung kann es zu einer Verschiebung bis hin zum Ablösen des Dichtungskörpers kommen, so dass eine störungsfreie Funktion eines Fahrzeugschiebedaches nicht gewährleistet ist.

Aus der DE-U 94 17 149 ist ein Dichtungselement mit einem Dichtungskörper aus elastischem Material bekannt, welches eine Klebefläche aufweist, mittels welcher es an der Unterseite des Deckels eines Schiebedaches, Hebedaches usw. befestigt wird. Die Klebefläche ist an einem Klebeband ausgebildet, welches mit seiner Rückseite an einem Grundkörper befestigt ist, der mit dem Dichtungskörper verbunden ist und aus einem steiferen Material als der Dichtungskörper besteht. Vor dem Befestigen der Dichtung ist die Klebefläche mit einer abziehbaren Schutzfolie geschützt.

Weitere Dichtungselemente sind aus der DE 197 20 713 C1 und EP 0 357 973 B1 bekannt, wobei dabei als bevorzugtes Material für den Dichtungskörper Ethylen-Propylen-Kautschuk (EPDM) genannt ist. Dieses Material ist jedoch hinsichtlich seiner Temperaturbeständigkeit, dem Rückstellverhalten, den Dichteigenschaften und der Anfrier- bzw. Verklebegefahr nicht optimal geeignet.

Es ist Aufgabe der vorliegenden Erfindung, ein Dichtungselement und ein Verfahren zur Herstellung eines Dichtungselementes mit einem Dichtungskörper, bestehend aus Silikon, zu schaffen, mittels dem eine kostengünstige und wirtschaftliche Herstellung einer schnellen und vereinfachten sowie prozesssicheren Klebeverbindung an der Verwendungsstelle ermöglicht wird.

Diese Aufgabe wird erfindungsgemäß bezüglich des Dichtungselements durch die Merkmale des Patentanspruches 1 und bezüglich des Verfahrens zur Herstellung durch die Merkmale des Patentanspruchs 11 gelöst. Eine vorteilhafte Verwendung des Gegenstandes ist in Anspruch 12 angegeben. Vorteilhafte Ausgestaltungen der Erfindung sind den jeweiligen Unteransprüchen zu entnehmen.

Durch ein Dichtungselement, dessen ein Trägerelement umfassendes doppelseitiges Klebeband eine erste Klebefläche mit einem vernetzenden Silikonkleber aufweist, wird erstmals eine einfache, rasche und sichere Möglichkeit einer Befestigung eines solchen Klebebandes auf einer Gegenfläche aus Silikon ermöglicht. Bei der erfindungsgemäßen Lösung ist es vorteilhaft, dass der Dichtungskörper, bestehend aus einem Silikon, hervorragende Eigenschaften hinsichtlich Temperaturbeständigkeit, Rückstellverhalten, Dichtheit und Schutz vor Anfrier- und Verklebungsgefahr aufweist und dennoch das Dichtungselement rasch, einfach und mit geringem Bauraumbedarf an der Verwendungsstelle angebracht werden kann, während beispielsweise bei direkter Verklebung des Dichtungskörpers an der Verwendungsstelle mittels Silikonkleber aufgrund der dadurch bedingten langen Aushärtezeit keine Verwendung in der Serienproduktion möglich ist. Durch die Verwendung eines vernetzenden bzw. ausvulkanisierenden Silikonklebers ist es möglich, eine stoff- und kraftschlüssige Verbindung zwischen dem Dichtungskörper und dem doppelseitigen Klebeband sowie der Verwendungsstelle herzustellen, die keine weichelastischen Eigenschaften aufweist und die ebenfalls keine zusätzlichen Aushärtezeiten erforderlich macht.

Bevorzugt können dabei Teilbereiche der ersten Klebefläche mit einem schneller aushärtenden Kleber, beispielsweise einem Acrylatkleber, versehen sein, der beim Anbringen der ersten Klebefläche auf einer Gegenfläche aus Silikon zunächst für eine vorläufige Fixierung sorgt, während der Silikonkleber in den übrigen Bereichen noch zur Herstellung der Betriebsfestigkeit vernetzt bzw. ausvulkanisiert.

Alternativ dazu kann die erste Klebefläche auch eine Mischung aus Silikonkleber und einem anderen Kleber, wie beispielsweise Acrylatkleber, enthalten.

Dadurch, dass beim erfindungsgemäßen Dichtungselement auf den Dichtungskörper zunächst eine einen Silikonkleber aufweisende erste Klebefläche eines doppelseitigen Klebebandes aufgebracht wird, wird das Dichtungselement derart vorbereitet, dass es nach Abziehen einer Schutzfolie mit seiner zweiten selbstklebenden Klebefläche, deren Kleber bevorzugt an die Eigenschaften der entsprechenden Verwendungsstelle angepasst ist, leicht und schnell an der Verwendungsstelle, beispielsweise an einer Kante eines Schiebedachdeckels oder an einem einen solchen umgebenden Öffnungsrand, befestigt werden kann.

Bevorzugt enthält das aus einem Acrylat-Schaum bestehende Trägerelement einen Acrylat-Kleber und bildet somit selbst unmittelbar die zweite, der Verwendungsstelle zugewandte Klebefläche. Ferner ist die Klebefläche vorzugsweise planar ausgebildet.

Die Klebefläche erstreckt sich bevorzugt im Wesentlichen über die gesamte Länge des Dichtungskörpers.

Die Herstellung des erfindungsgemäßen Dichtungselementes, welches einen Dichtungskörper, bestehend aus Silikon, aufweist, erfolgt dadurch, dass in einem ersten Verfahrensschritt der Dichtungskörper, bestehend aus Silikon, durch das Extrusionsverfahren kontinuierlich hergestellt wird und dass in einem zweiten Verfahrensschritt ein Trägerelement aus einem Acrylat-Schaum mit einer Schutzfolie an der Unterseite hergestellt wird. In einem dritten Verfahrensschritt wird ein Primer auf die Oberseite des Trägerelements aufgebracht. Daraufhin wird der die erste Klebefläche bildende Silikonkleber in einem vierten Verfahrensschritt auf den Primer aufgebracht. Das doppelseitige Klebeband wird dabei mit dem Silikonkleber zumindest teilweise beschichtet.

In einem fünften Verfahrensschritt wird der Dichtungskörper mit der ersten Klebefläche verbunden und in einem sechsten Verfahrensschritt erfolgt das Vernetzen des die Klebefläche bildenden Silikonklebers durch Temperatur- und/oder Druck- und/oder Feuchtigkeitseinwirkung.

Im Folgenden ist eine Ausführungsform der Erfindung anhand der beigefügten Zeichnungen beispielhaft näher erläutert. Es zeigt:

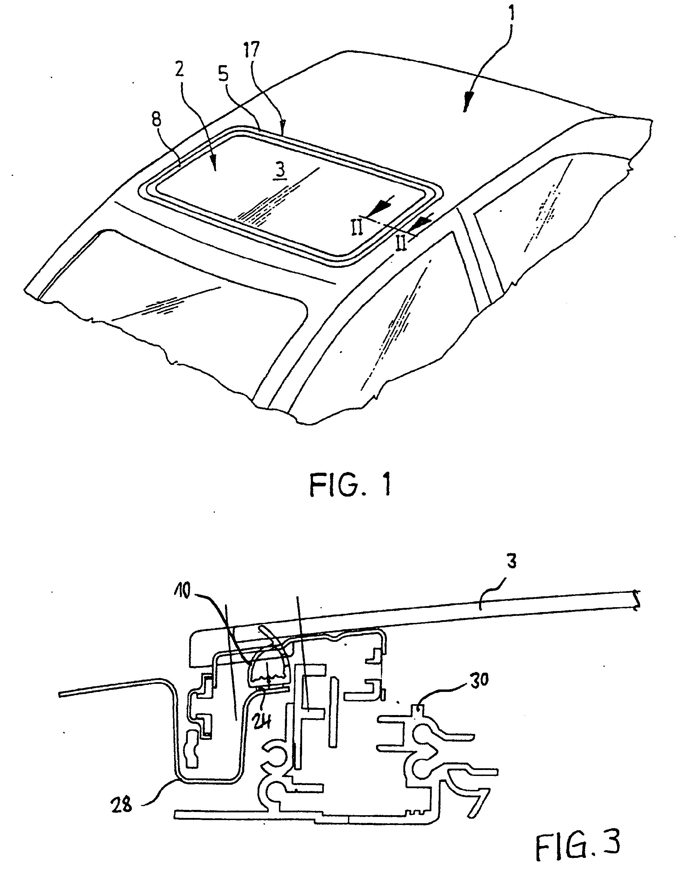

- Fig. 1: eine schematische perspektivische Ansicht eines Fahrzeugdaches mit einem öffnungsfähigen Deckel,

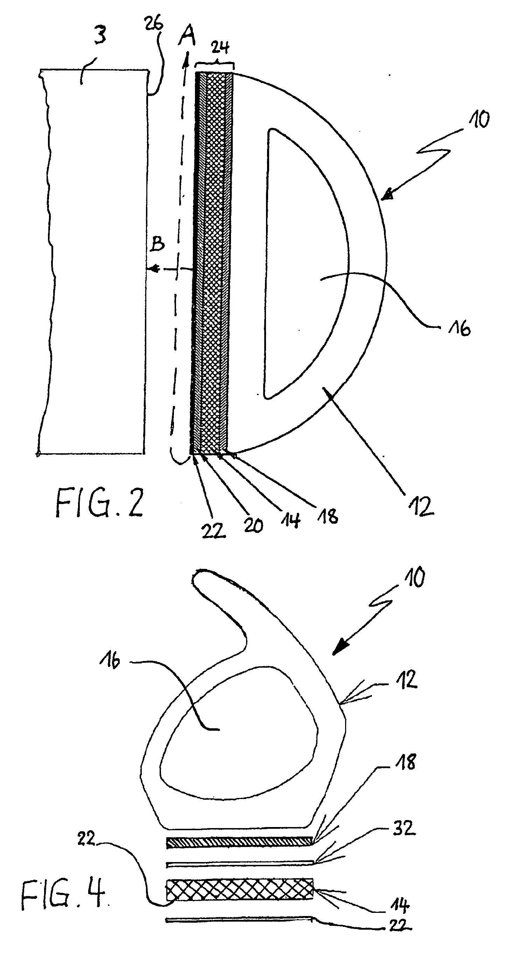

- Fig. 2: einen Querschnitt durch ein an einem Deckelrand anzubringendes Dichtungselement,
- Fig. 3: einen Querschnitt durch ein an einem Dachrahmen angeordnetes Dichtungselement, und
- Fig. 4: einen Querschnitt durch einen alternativen Aufbau eines doppelseitigen Klebebandes mit einem Acrylat-Schaum als Trägerelement.

## Patentansprüche

1. Dichtungselement (10) zur Verwendung in Fahrzeugen, welches einen Dichtungskörper (12) aus einem Silikon-Werkstoff und ein doppelseitiges Klebeband (24) mit einem Trägerelement (14) und zwei an dem Trägerelement (14) angeordnete selbstklebenden Klebeflächen (18, 20) umfasst, wobei die dem Dichtungskörper (12) zugewandte erste Klebefläche (18) des Trägerelements (14) zumindest teilweise durch einen Silikonkleber gebildet ist, der die Verbindung zwischen dem Dichtungskörper (12) und dem Trägerelement (14) herstellt, wobei die zweite Klebefläche (20) des Trägerelements (14) aus einem Acrylatklebstoff zum Befestigen des Trägerelements (14) an einer Verwendungsstelle gebildet ist, **dadurch gekennzeichnet, dass** der Silikonkleber ein vernetzender Silikonkleber ist.

2. Dichtungselement nach Anspruch 1, **dadurch gekennzeichnet, dass** die den Silikonkleber aufweisende erste Klebefläche (18) Teilbereiche mit einem anderen Kleber aufweist.

3. Dichtungselement nach Anspruch 1 oder 2, **dadurch gekennzeichnet, dass** das Trägerelement (14) von einem Acrylat-Schaum gebildet wird.

4. Dichtungselement nach Anspruch 3, **dadurch gekennzeichnet, dass** der Acrylat-Schaum des Trägerelementes (14) die der Verwendungsstelle zugewandte zweite Klebefläche (20) bildet.

5. Dichtungselement nach einem der vorhergehenden Ansprüche, **dadurch gekennzeichnet, dass** zwischen der den Silikonkleber aufweisende ersten Klebefläche (18) und dem Trägerelement (14) ein Primer (32) angeordnet ist.

6. Dichtungselement nach einem der Ansprüche 1 bis 3, **dadurch gekennzeichnet, dass** das Trägerelement (14) von einem aus einem Acrylat-Schaum bestehenden flexiblen Band gebildet ist.

7. Dichtungselement nach einem der Ansprüche 1 bis 5, **dadurch gekennzeichnet, dass** der die erste Klebefläche (18) bildende Silikonkleber durch Temperatur- und/oder Druckeinwirkung vernetzt ist.

8. Dichtungselement nach einem der Ansprüche 1, 5 oder 7, **dadurch gekennzeichnet, dass** der die erste Klebefläche (18) bildende Silikonkleber durch Feuchtigkeitseinwirkung vernetzt ist

9. Dichtungselement nach einem der Ansprüche 6, 7 oder 8, **dadurch gekennzeichnet, dass** sich die zweite Klebefläche (20) im Wesentlichen über die ganze Länge des Dichtungskörpers (12) erstreckt.

10. Dichtungselement nach Anspruch 9, **dadurch gekennzeichnet, dass** die zweite Klebefläche (20) im Wesentlich planar ausgebildet ist.

11. Verfahren zur Herstellung eines Dichtungselementes zur Verwendung in Fahrzeugen, welches einen Dichtungskörper (12), bestehend aus Silikon, umfasst, **gekennzeichnet durch** die folgenden Verfahrensschritte:
a) Extrusion des Dichtungskörpers (12),
b) Herstellen eines Trägerelements (14) aus einem Acrylat-Schaum mit einer Schutzfolie (22) an der Unterseite,
c) Aufbringen eines Primers (32) auf die Oberseite des Trägerelements (14),
d) Aufbringen des eine erste Klebefläche (18) bildenden Silikonklebers auf den Primer (32),
e) Verbinden des Dichtungskörpers (12) mit der ersten Klebefläche 18),
f) Vernetzung des die Klebefläche (18) bildenden Silikonklebers **durch** Temperatur- und/oder Druckeinwirkung und/oder Feuchtigkeitseinwirkung.

12. Verwendung eines Dichtungselements nach einem der Ansprüche 1 bis 10 zur abdichtenden Befestigung in einem öffnungsfähigen Fahrzeugdach.

## Claims

1. Sealing element (10) for use in vehicles, which comprises a sealing body (12) of a silicone material and a double-sided adhesive tape (24) with a backing element (14) and two self-adhesive adhering surfaces (18, 20) arranged on the backing element (14), the first adhering surface (18) of the backing element (14), facing the sealing body (12), being at least partially formed by a silicone adhesive which establishes the connection between the sealing body (12) and the backing element (14), the second adhering surface (20) of the backing element (14) being formed by an acrylic adhesive for fixing the backing element (14) in place at an application site, **characterized in that** the silicone adhesive is a crosslinking silicone adhesive.

2. Sealing element according to Claim 1, **characterized in that** the first adhering surface (18), having the silicone adhesive, has subregions with a different adhesive.

3. Sealing element according to Claim 1 or 2, **characterized in that** the backing element (14) is formed by an acrylic foam.

4. Sealing element according to Claim 3, **characterized in that** the acrylic foam of the backing element (14) forms the second adhering surface (20), facing the application site.

5. Sealing element according to one of the preceding claims, **characterized in that** a primer (32) is arranged between the first adhering surface (18), having the silicone adhesive, and the backing element (14).

6. Sealing element according to one of Claims 1 to 3, **characterized in that** the backing element (14) is formed by a flexible tape consisting of an acrylic foam.

7. Sealing element according to one of Claims 1 to 5, **characterized in that** the silicone adhesive forming the first adhesive surface (18) is crosslinked by the effect of heat and/or pressure.

8. Sealing element according to one of Claims 1, 5 or 7, **characterized in that** the silicone adhesive forming the first adhering surface (18) is crosslinked by the effect of moisture.

9. Sealing element according to one of Claims 6, 7 or 8, **characterized in that** the second adhering surface (20) extends substantially over the entire length of the sealing body (12).

10. Sealing element according to Claim 9, **characterized in that** the second adhering surface (20) is formed in a substantially planar manner.

11. Method for producing a sealing element for use in vehicles, which comprises a sealing body (12), consisting of silicone, **characterized by** the following method steps:
a) extrusion of the sealing body (12),
b) producing a backing element (14) from an acrylic foam with a protective film (22) on the underside,
c) applying a primer (32) to the upper side of the backing element (14),
d) applying the silicone adhesive forming the first adhering surface (18) to the primer (32),
e) connecting the sealing body (12) to the first adhering surface (18),
f) crosslinking the silicone adhesive forming the adhering surface (18) by the effect of heat and/or pressure and/or by the effect of moisture.

12. Use of a sealing element according to one of Claims 1 to 10 for sealing fixing in an openable vehicle roof.

## Revendications

1. Elément d'étanchéité (10) destiné à être utilisé dans des véhicules et comportant un corps d'étanchéité (12) en matériau à base de silicone et un ruban adhésif double face (24) doté d'un élément de support (14) et de deux surfaces autocollantes (18, 20) disposées sur l'élément de support (14),
la première surface adhésive (18), tournée vers le corps d'étanchéité (12), de l'élément de support (14) étant formée au moins partiellement par un adhésif au silicone qui établit la liaison entre le corps d'étanchéité (12) et l'élément de support (14), la deuxième surface adhésive (20) de l'élément de support (14) étant formée d'un adhésif à l'acrylate destiné à fixer l'élément de support (14) sur l'emplacement d'utilisation,
**caractérisé en ce que**
l'adhésif au silicone est un adhésif au silicone à réticulation.

2. Elément d'étanchéité selon la revendication 1, **caractérisé en ce que** la première surface adhésive (18) doté d'un adhésif au silicone présente des parties dotées d'un autre adhésif.

3. Elément d'étanchéité selon les revendications 1 ou 2, **caractérisé en ce que** l'élément de support (14) est formé d'une mousse d'acrylate.

4. Elément d'étanchéité selon la revendication 3, **caractérisé en ce que** la mousse d'acrylate de l'élément de support (14) forme la deuxième surface adhésive (20) tournée vers l'emplacement d'application.

5. Elément d'étanchéité selon l'une des revendications précédentes, **caractérisé en ce qu'**une couche de fond (32) est disposée entre la première surface adhésive (18) qui présente un adhésif au silicone et l'élément de support (14).

6. Elément d'étanchéité selon l'une des revendications 1 à 3, **caractérisé en ce que** l'élément de support (14) est formé d'un ruban flexible constitué d'une mousse d'acrylate.

7. Elément d'étanchéité selon l'une des revendications 1 à 5, **caractérisé en ce que** l'adhésif au silicone qui forme la première surface adhésive (18) est réticulé par l'action de la température et/ou de la pression.

8. Elément d'étanchéité selon l'une des revendications 1, 5 ou 7, **caractérisé en ce que** l'adhésif au silicone qui forme la première surface adhésive (18) est réticulé par l'effet de l'humidité.

9. Elément d'étanchéité selon l'une des revendications 6, 7 ou 8, **caractérisé en ce que** la deuxième surface adhésive (20) s'étend essentiellement sur toute la longueur du corps d'étanchéité (12).

10. Elément d'étanchéité selon la revendication 9, **caractérisé en ce que** la deuxième surface adhésive (20) a une configuration essentiellement plane.

11. Procédé de fabrication d'un élément d'étanchéité destiné à être utilisé dans des véhicules et comportant un corps d'étanchéité (12) constitué de silicone, **caractérisé par** les étapes de traitement suivantes :
a) extrusion du corps d'étanchéité (12),
b) formation d'un élément de support (14) en mousse d'acrylate, doté d'une feuille de protection (22) sur son côté inférieur,
c) application d'une couche de fond (32) sur le côté supérieur de l'élément de support (14),
d) application de l'adhésif au silicone qui forme la première surface adhésive (18) sur la couche de fond (32),
e) liaison du corps d'étanchéité (12) à la première surface adhésive (18) et
f) réticulation de l'adhésif au silicone qui forme la surface adhésive (18) par l'effet de la température et/ou de la pression et/ou par l'effet de l'humidité.

12. Utilisation d'un élément d'étanchéité selon l'une des revendications 1 à 10 pour la fixation étanche dans le toit ouvrant d'un véhicule.
